Europäisches Patentamt

(19) European Patent Office

Office européen des brevets

(11) Numéro de publication: **0 208 120**
**A1**

(12) **DEMANDE DE BREVET EUROPEEN**

(21) Numéro de dépôt: 86107309.6

(22) Date de dépôt: 29.05.86

(51) Int. Cl.⁴: **H 05 B 39/04**

(30) Priorité: 31.05.85 FR 8508239

(43) Date de publication de la demande:
14.01.87 Bulletin 87/3

(84) Etats contractants désignés:
DE FR GB IT NL

(71) Demandeur: VIBRACHOC, Société Anonyme dite:
Parc d'Activités de l'Eglantier C.E. 2804 Lisses
F-91028 Evry Cédex(FR)

(72) Inventeur: Queudray, Pierre
Montreuche - Venoy
F-89290 Champs Sur Yonne(FR)

(74) Mandataire: Weinmiller, Jürgen et al,
Lennéstrasse 9
D-8133 Feldafing(DE)

(54) Dispositif d'accroissement du temps d'utilisation d'une source de lumière électroluminescente.

㊉ Dispositif d'accroissement du temps d'utilisation d'une source de lumière électroluminescente (1) alimentée par une source de tension (13A, 13B), caractérisé en ce qu'il consiste à placer un détecteur de lumière (3) au voisinage de cette source de lumière (1) et à insérer celle-ci dans une boucle d'asservissement.

Application à l'éclairage de tableaux de bord d'avions.

EP 0 208 120 A1

- 1 -

0208120

Dispositif d'accroissement du temps d'utilisation d'une source de lumière électroluminescente

La présente invention concerne un dispositif d'accroissement du temps d'utilisation d'une source de lumière électroluminescente.

Les sources de lumière électroluminescentes ont une durée de vie déterminée. A titre d'exemple, une source de lumière électroluminescente utilisée dans un tableau de bord d'avion a une durée de vie limitée par la chute importante de son énergie lumineuse au cours du temps. Après 3000 heures l'énergie lumineuse a déjà chuté d'environ 80%, et ceci est principalement dû à la pollution des semi-conducteurs composant cette source.

Pour stabiliser cette énergie lumineuse, donc augmenter sensiblement la durée d'exploitation de la source de lumière électroluminescente, il suffit d'augmenter le courant d'alimentation de la source par une intervention manuelle sur un potentiomètre de réglage par exemple.

Le but de la présente invention est de s'affranchir de cette intervention manuelle en plaçant la source de lumière électroluminescente dans un circuit d'asservissement pour maintenir un niveau constant d'émission de lumière.

On connait notamment par le document DE 1.489.383, un dispositif permettant le réglage à puissance lumineuse constante d'une lampe basse tension à incandescence. Ce dispositif module la largeur d'impulsions de forme rectangulaire, ce qui a pour effet de modifier la valeur moyenne et les harmoniques de la puissance fournie. Ce dispositif est totalement inapplicable à une source de lumière électroluminescente, d'une part car ce type de source est insensible à une variation de la valeur moyenne, mais sensible à une variation de charge, et d'autre part car la source de lumière électroluminescente serait rapidement détruite par électrolyse.

La présente invention a pour objet un dispositif d'accroissement du temps d'utilisation d'une source de lumière électrominescente alimentée par une source de tension, caractérisé en ce qu'il comprend un détecteur délivrant un signal proportionnel, ou en variation monotone, à la lumière émise, et un circuit électronique d'asservissement qui module la valeur quadratique du courant d'alimentation.

Selon un premier mode de réalisation de ce dispositif, utilisant une boucle d'asservissement linéaire et une source de tension alternative, le circuit électronique d'asservissement est un circuit à courant porteur comportant une source de référence, un comparateur, un amplificateur, un multiplicateur et un détecteur dont le signal émis est transmis au comparateur. On contrôle donc l'énergie lumineuse émise par la source de lumière en réglant l'intensité qui la traverse.

Selon un deuxième mode de réalisation utilisant une boucle d'asservissement linéaire et une source de tension continue, il faut dans ce cas alimenter la source de lumière électroluminescente à travers un convertisseur tension-fréquence, le circuit électronique d'asservissement est un circuit à fréquence variable comportant une source de référence, un comparateur, un amplificateur, un convertisseur tension-fréquence et un détecteur, le signal émis par ce détecteur étant transmis au comparateur.

Selon une variante de ce deuxième mode, le circuit électronique d'asservissement est un circuit mixte comportant un convertisseur tension-fréquence raccordé à une source de tension continue et un multiplicateur alimentant la source de lumière électroluminescente.

Selon un troisième mode de réalisation utilisant une boucle d'asservissement tout ou rien, le circuit électronique d'asservissement comporte une source de référence, un comparateur, un amplificateur, un relais tout ou rien à travers lequel une source de tension alimente la source de lumière électroluminescente, et un détecteur, le signal émis par ce détecteur étant transmis au comparateur.

Selon un exemple de réalisation de ce troisième mode dans lequel la source de tension est continue, les sources de référence et de tension sont confondues et le relais est un transistor, la source de lumière électroluminescente étant alimentée par le secondaire d'un transformateur, l'alimentation du primaire étant réalisée par la source de tension à travers une résistance et le transistor, le détecteur étant un photo-transistor dont une jonction est reliée au circuit d'alimentation du primaire du transformateur.

Il est décrit ci-après, à titre d'exemple et en référence aux dessins annexés, plusieurs dispositifs selon l'invention.

La figure 1 représente un dispositif utilisant une boucle d'asservissement linéaire et une source de tension alternative.

La figure 2 représente un dispositif utilisant une boucle d'asservissement linéaire et une source de tension continue.

La figure 3 représente une variante du dispositif de la figure 2.

La figure 4 représente un dispositif utilisant une boucle d'asservissement tout ou rien et une source de tension.

La figure 5 représente un exemple de réalisation du dispositif de la figure 4 dans lequel la source de tension est continue.

Dans toutes ces figures, une source 13, 13A, 13B, alimente à travers le dispositif selon l'invention, une source de lumière électroluminescente 1 qui engendre une énergie lumineuse représentée par la référence 2.

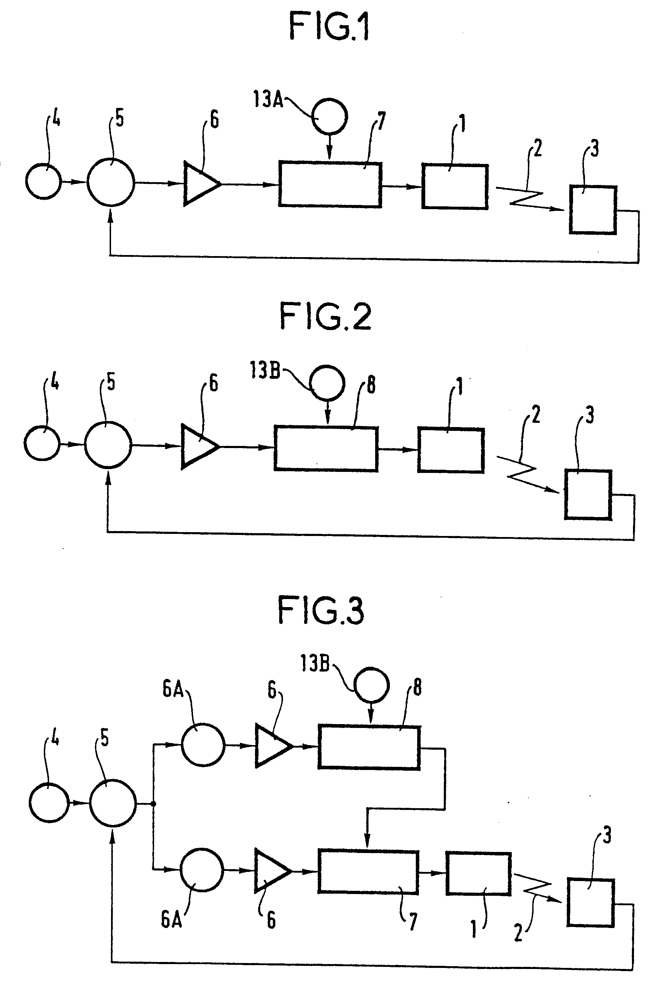

Dans la figure 1, la source de lumière électroluminescente 1 est alimentée par la source de tension alternative 13A à travers un multiplicateur 7 pour produire l'énergie lumineuse 2 capable d'éclairer un tableau de bord par exemple. Le dispositif selon l'invention se compose d'un détecteur de lumière 3, placé dans le tableau de bord et en regard du flux lumineux, d'un comparateur 5 recevant un signal électrique d'une source de référence 4 et un autre signal du détecteur de lumière 3, d'un amplificateur-intégrateur 6 placé entre le comparateur 5 et le multiplicateur 7.

Un dispositif de ce type fonctionne de la manière suivante :
- la source de lumière 1 est éteinte et le signal délivré par le détecteur 3 est donc nul. On applique une tension constante par la source 13A, la source de référence 4, qui se compare à zéro, est alors intégrée par l'amplificateur 6 et l'on obtient, à la sortie du multiplicateur 7, un signal résultant du produit de la tension de la source 13A par le gain de l'amplificateur 6. La source de lumière s'illumine et provoque un signal différent de zéro à la sortie du détecteur de lumière 3. Ce signal se compare à celui émis par la source de référence 4. Le résultat de la comparaison est intégré par l'amplificateur 6 et ainsi de suite. L'équilibre, qui dépend des gains et des fonctions de transfert des différents éléments est atteint lorsque le signal sortant du comparateur est nul.

0208120

Si l'énergie lumineuse 2 fournie par la source de lumière diminue, la tension délivrée par le détecteur 3 diminue et la différence de tension lue par le comparateur augmente. Cette différence est intégrée par l'amplificateur 6 et la source 1 reçoit alors un courant moyen plus fort. Ce nouveau courant fait augmenter l'énergie lumineuse de la source 1 jusqu'à ce que le détecteur de lumière délivre une tension égale à la tension produite par la source de référence 4.

L'emploi d'un simple multiplicateur 7 impose que la source de courant 13A soit alternative.

Dans la figure 2, la source de tension 13B est continue et l'on est alors tenu de remplacer le multiplicateur 7 par un convertisseur tension-fréquence 8, pour faire fonctionner la source de lumière à fréquence variable.

Dans la figure 3, il est représenté une variante du dispositif de la figure 2 comportant un multiplicateur 7 et un convertisseur tension-fréquence 8 montés en chaîne. La source de courant 13B est continue et elle alimente la source 1 à travers le convertisseur tension-fréquence 8 et le multiplicateur 7.

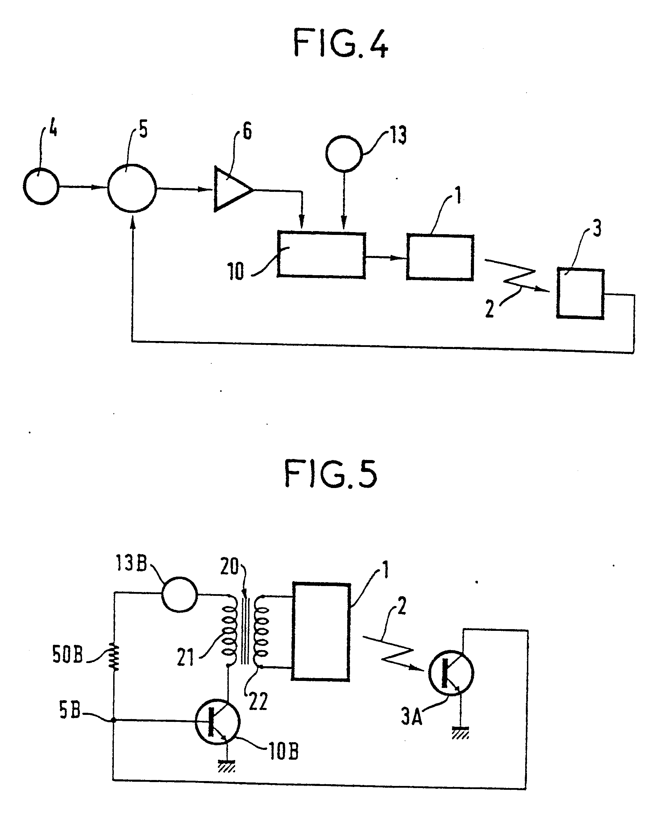

Dans la figure 4, le dispositif comporte un circuit électronique d'asservissement tout ou rien et la source 1 est alimentée par une source de tension 13 à travers un relais tout ou rien 10. Le dispositif selon l'invention se compose d'un détecteur de lumière 3 placé dans le tableau de bord et en regard du flux lumineux 2, d'un comparateur 5 recevant un signal électrique d'une source de référence 4 et un autre signal du détecteur de lumière 3, d'un amplificateur 6, et du relais 10.

Un tel dispositif fonctionne de la manière suivante :
- la source de lumière 1 est éteinte, le détecteur de lumière 3 ne délivre aucune tension de sortie et le comparateur 5 délivre alors une tension égale à celle de la source de référence 4. Cette tension, amplifiée par l'amplificateur 6, alimente le relais 10. La source 13 alimente alors la source 1. A cet instant le détecteur de lumière 3, qui reçoit une énergie lumineuse 2, délivre un signal au comparateur 5. La tension du signal sortant de ce comparateur et alimentant le relais diminue et le relais interrompt le circuit. La source 13 n'alimente plus la source 1. La fréquence de fonctionnement dépend de la valeur du courant de la source 13, et des différentes fonctions de transfert.

Dans la figure 5 représentant un exemple de réalisation du dispositif de la figure 4, la source de tension 13B est continue, le relais est un transitor 10B, le point 5B représente le comparateur 5, et les sources 4 et 13B sont confondues en une seule appelée 13B.

Ce circuit électronique d'asservissement comprend une source de tension continue 13B, une résistance 50B, un transformateur 20, un transistor 10B, et un photo-transistor 3A. La source 1 est alimentée par le secondaire 22 du transformateur 20 et l'énergie lumineuse 2, émise par cette source 1, est captée par le photo-transistor 3A.

Un tel dispositif fonctionne de la manière suivante :

Avant l'application du courant de la source 13B, la source 1 est éteinte, il n'y a donc pas d'émission de lumière. On applique alors le courant de la source 13B. Le photo-transistor 3A ne voit pas de lumière et il est donc bloqué. Le transistor 10B reçoit alors le courant venant de la source 13B à travers la résistance 50B. Ce transistor 10B devenu passant permet l'alimentation du primaire 21 du transformateur par la source 13B et le secondaire 22 alimente la source 1. Il y a un $\frac{di}{dt}$ donc un $\frac{d\phi}{dt}$ donc surtension au secondaire du transformateur. Le photo-transistor 3A capte l'énergie lumineuse 2 et il devient alors passant. Le courant provenant de la source 13B et traversant la résistance 50B, passe à travers le photo-transistor 3A. Le transistor 10B n'est alors plus alimenté, il se bloque et la source 1 s'éteint lorsque $\frac{d\phi}{dt} = 0$. Le cycle recommence et pour contrôler le niveau moyen de l'énergie lumineuse, il suffit de faire varier la résistance 50B ou le niveau de la source 13B.

Ce dispositif peut être amélioré, par exemple dans un tableau de bord d'avion, où l'on peut doser la luminance d'une source de lumière électroluminescente, donc du panneau de commande éclairé par une ou plusieurs lampes, en fonction de l'éclairage ambiant de la cabine de pilotage.

- 6 -                    0208120

REVENDICATIONS

1/ Dispositif d'accroissement du temps d'utilisation d'une source de lumière électroluminescente (1) alimentée par une source de tension (13, 13A, 13B), caractérisé en ce qu'il comprend un détecteur (3) délivrant un signal proportionnel, ou en variation monotone, à la lumière émise par la source de lumière, et un circuit électronique d'asservissement qui module la valeur quadratique du courant d'alimentation.

2/ Dispositif selon la revendication 1, caractérisé en ce que le circuit électronique d'asservissement est un circuit à courant porteur comportant une source de référence (4), un comparateur (5), un amplificateur-intégrateur (6), un multiplicateur (7) à travers lequel une source de tension alternative (13A) alimente la source de lumière électroluminescente, et un détecteur (3), le signal émis par ce détecteur (3) étant transmis au comparateur (5).

3/ Dispositif selon la revendication 1, caractérisé en ce que le circuit électronique d'asservissement est un circuit à fréquence variable comportant une source de référence (4), un comparateur (5), un amplificateur-intégrateur (6), un convertisseur tension-fréquence (8) à travers lequel une source de tension continue (13B) alimente la source de lumière électroluminescente, et un détecteur (3), le signal émis par ce détecteur (3) étant transmis au comparateur (5).

4/ Dispositif selon la revendication 3, caractérisé en ce que le circuit électronique d'asservissement est un circuit mixte comportant un convertisseur tension-fréquence (8) raccordé à une source de tension continue (13B) et un multiplicateur (7) alimentant la source de lumière électroluminescente.

5/ Dispositif selon la revendication 1, caractérisé en ce que le circuit électronique d'asservissement est un circuit tout ou rien comportant une source de référence (4), un comparateur (5), un amplificateur (6) et un relais tout ou rien (10) à travers lequel une source de tension (13) alimente la source de lumière électroluminescente (1), et un détecteur (3), le signal émis par ce détecteur (3) étant transmis au comparateur (5).

6/ Dispositif selon la revendication 5, dans lequel la source de tension (13B) est continue, caractérisé en ce que les sources de référence (4) et de tension (13B) sont confondues et en ce que le relais est un transistor (10B), la source de lumière électroluminescente étant alimentée par le secondaire (22) d'un transformateur (20), l'alimentation du primaire (21) étant réalisée par la source de tension (13B) à travers une résistance (50) et le transistor (10B), le détecteur étant un photo-transistor (3A) dont une jonction est reliée au circuit d'alimentation du primaire du transformateur (20).

## FIG.1

## FIG.2

## FIG.3

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | DE-A-1 489 383 (LICENTIA)<br>* En entier *<br><br>--- | 1-4 | H 05 B 39/04 |
| A | FR-A-2 305 091 (PRECISION MECANIQUE)<br>* Page 3, ligne 23 - page 4, ligne 12; figure 1 *<br><br>----- | 1,2 | |

**DOMAINES TECHNIQUES RECHERCHES (Int Cl.4)**

H 05 B 39/00

Le présent rapport de recherche a été établi pour toutes les revendications

| Lieu de la recherche | Date d'achèvement de la recherche | Examinateur |
|---|---|---|
| LA HAYE | 22-10-1986 | DUCHEYNE R.C.L. |